# EUROPÄISCHE PATENTSCHRIFT

(11) **EP 2 070 997 B1**
(45) Veröffentlichungstag und Bekanntmachung des Hinweises auf die Patenterteilung: **20.07.2011**
(21) Anmeldenummer: 08021505.6
(22) Anmeldetag: 11.12.2008
(51) Int. Cl.: C09D 5/18

(54) **Brandschutzmittel**
Flame retardant
Agent ignifuge

(30) Priorität: 11.12.2007 DE 102007059821
(43) Veröffentlichungstag der Anmeldung: 17.06.2009
(73) Patentinhaber: Fraunhofer-Gesellschaft zur Förderung der angewandten Forschung e.V., 80686 München (DE)
(72) Erfinder: Kruse, Dirk, 38102 Braunschweig (DE); Simon, Dr. Sebastian, 86899 Landsberg am Lech (DE)
(74) Vertreter: Kröncke, Rolf

(56) Entgegenhaltungen:
- DE-A1-102004 023 166

## Beschreibung

Das Aufbringen von Schutzanstrichen, die sich im Brandfall ausdehnen, ist ein übliches Verfahren im Rahmen eines baulichen Brandschutzes zum Schutz von Werkstoffen und Bauteilen. Durch diesen physikalischen Temperaturschutz wird der Temperaturzutritt zu dem Bauteil bzw. Werkstoff verzögert. Die US 4,965,296 A1 beschreibt ein flammhemmendes Material, das sich aus einem flammhemmenden Beschichtungsmaterial und einem elektrisch leitfähigen Material zusammensetzt. Das flammhemmende Beschichtungsmaterial besteht dabei aus schaum- und kohlenstoffbildenden Substanzen, einer gaserzeugenden Verbindung, einem filmbildenden Bindematerial und Lösemitteln.

Die US 4,879,320 A1 beschreibt eine flammhemmende Zusammensetzung ähnlich der US 4,965,296 A1, bei der jedoch anstelle eines leitfähigen Materials ein keramisches Fasermaterial zugesetzt ist.

Die US 5,225,464 A1 beschreibt eine wässrige Intumeszenz-Formulierung auf Basis eines Reaktionsproduktes aus Phosphorsäure, Melamin und Monoammoniumphosphat, welche mit Pentaerytrithol, chlorierten Kohlenwasserstoffen und weiteren Verbindungen, insbesondere Polyvinylacetat, ein verbessertes Intumeszenz-Beschichtungsmaterial liefern soll.

Die DE 43 43 668 A1 beschreibt aufblähbare, flammhemmende Überzugsmassen, bestehend aus einem filmbildenden Bindemittel, Ammoniumpolyphosphat, mindestens einer bei Hitzeeinwirkung carbonisierenden Substanz, einem Treibmittel, einem Dispergiermittel sowie Füllstoffen.

Die DE 199 09 387 A1 beschreibt eine dämmschichtbildende Brandschutzbeschichtung auf Basis von im Brandfall schaumbildenden und kohlenstoffbildenden Substanzen, filmbildenden Bindemitteln, Treibmitteln und Hilfs- sowie Zusatzstoffen, bei dem das Treibmittel Melaminpolyphosphat enthält. Diese Brandschutzbeschichtung ist insbesondere unter tropischen Bedingungen stabil, d. h. sie setzt nur wenig NH₃ frei.

In den vorgenannten Schutzrechten wird die grundsätzliche Wirkungsweise von dämmschichtbildenden, isolierenden Anstrichen beschrieben. Um eine erhöhte Feuerwiderstandsdauer, also den Zeitraum zwischen Brandbeginn und strukturellem Versagen von Bauteilen, zu erzielen, sind diese bestimmungsgemäß auf der Außenseite des Bauteils aufzubringen, also zwischen dem Werkstoff oder Bauteil und dem zu erwartenden Brandereignis.

Neben Außenanstrichen sind auch brandgeschützte, organisch gebundene Plattenwerkstoffe der Brandschutzklasse B1 bekannt. Brandschutzeigenschaften, die eine Einordnung der Plattenwirkstoffe in die Brandschutzklasse B1 ermöglichen, können nur erreicht werden, wenn neben den brennbaren organischen Bindemitteln Flammschutzmittel bzw. Brandschutzmittel zugegeben werden. Flammschutzmittel sind chemische Substanzen, die entweder die Entflammbarkeit und/oder die Brennbarkeit vermindern oder die Feuerwiderstandsdauer des Werkstoffes oder des Bauteils erhöhen. Dies erfolgt durch eine Reduzierung der Wärmezufuhr durch das Hinzufügen von Stoffen, die sich in einem stark endothermen Prozess zersetzen und dabei nicht brennbare Gase erzeugen, die zusätzlich die Flammen eindämmen, zum Beispiel Aluminium oder Magnesiumhydroxid. Ebenfalls können die Flammen durch die Entwicklung chemischer Substanzen, die die H- und OH-Radikale binden, erstickt werden. Schließlich erfolgt eine Begrenzung des Wärmeflusses durch die Schaffung einer isolierenden Schicht an der Oberfläche. Brandschutzmittel werden dabei als eine Imprägnierung bzw. als Zuschlagstoff bei Holzwerkstoffen angewendet. Die notwendigen Zusatzmittel erhöhen zunächst die produktbezogenen Materialkosten. Hinzu kommt es bei den üblichen Zusatzmitteln zu einer Veränderung des pH-Wertes und der alkalischen Pufferkapazität, was unerwünschte Veränderungen im Erhärtungsverhalten der organischen Bindemittel zur Folge hat. Sofern eine für die gewünschte Festigkeit des Holzwerkstoffproduktes ausreichende Erhärtung bei den notwendigen Mengen an Zusatzmitteln überhaupt noch stattfindet, sind sehr lange Presszeiten erforderlich. Dies schränkt die wirtschaftliche Herstellung der insbesondere plattenartigen Holzwerkstoffprodukte erheblich ein. Auch sind die besonders wirksamen Brandschutzmittel ökologisch bedenklich, da sie Halogenverbindungen enthalten. Halogenfreie Brandschutzmittel müssen aufgrund ihrer eingeschränkten Wirksamkeit in besonders hohen Dosierungen eingesetzt werden.

Die DE 33 02 841 A1 und die DE 25 23 537 beschreiben Verfahren zur Herstellung schwer entflammbarer Baustoffplatten mittels Wasserglas als Brandschutzmittel. Die US 4,761,342 beschreibt eine Faserplatte mit reduzierter Entflammbarkeit durch Ausrüstung des Bindemittels mit Alkali-Silikat Lösung. Weitere bekannte Lösungsansätze sind die Imprägnierung der lignocellulosehaltigen Partikel mittels üblicher Flammschutzmittel wie zum Beispiel Borax oder Ammoniumphosphat.

Aus der DE 10 2004 023 166 A1 ist ein Brandschutzanstrich bekannt, der durch die Kombination von expandierenden und keramisierenden Reaktionen gekennzeichnet ist. Mittels eines solchen Anstriches ist es möglich, die Entzündung von Holz über definierte Zeiträume zu verhindern.

Aufgabe der vorliegenden Erfindung ist es, ein Brandschutzmittel bereitzustellen, mit dem ein verbesserter Brandschutz möglich ist.

Erfindungsgemäß wird diese Aufgabe durch ein Brandschutzmittel mit den Merkmalen des Anspruchs 1 gelöst, Vorteilhafte Ausgestaltungen und Weiterbildungen der Erfindung sind in den Unteransprüchen ausgeführt.

Erfindungsgemäß ist vorgesehen, dass das Brandschutzmittel mit keramisierenden oder verglasenden Bestandteilen versehen ist und zudem exotherm reagierende Zuschläge enthält, die bei Temperaturen von mehr als 90° C unter Freisetzung thermischer Energie reagieren, wobei die Zuschläge eine Reaktionstemperatur von mehr als 700°C erzeugen, um die keramisierenden oder verglasenden Bestandteile bei der Ausbildung einer porösen Keramik zu unterstützen. Diese exotherm reagierenden Zuschläge sind dabei solche, die des Weiteren unterhalb der Umsetzungstemperatur der verglasenden oder keramisierenden Bestandteile reagieren, wie z. B. unterhalb von Temperaturen unter 400°C, wie 350°C, 300°C, und insbesondere unter 250°C, wie 200°C. Durch die Zugabe exotherm reagierender Zuschläge ist es möglich, bereits zu einem frühen Zeitpunkt sehr hohe Umgebungstemperaturen zu erzeugen. Nach Überschreiten einer definierten Temperatur, der sogenannten "Triggertemperatur" reagieren die Zuschläge und setzen schlagartig Energie in Form hoher Temperaturen frei. Diese Temperaturen überschreiten diejenigen Temperaturen, die erforderlich sind, um eine Verglasung oder Keramisierung zu bewirken. Auf diese Weise ist es möglich, dass lokal begrenzt, nämlich in dem Brandschutzmittel selbst, sehr hohe Temperaturen vorhanden sind, die in der Regel größer als 700°C sind, ohne dass dieses Temperaturniveau in dem gesamten Raum oder in der weiteren Umgebung das mit dem Brandschutzmittel versehenen Gegenstandes erreicht wert den muss. Um den positiven Effekt einer verglasenden oder keramisierenden Wirkung eines Brandschutzmittels bereits bei niedrigen Brandtemperaturen oder zu einem möglichst frühen Zeitpunkt zu aktivieren, wurden die exotherm reagierenden Zuschläge in dem Brandschutzmittel vorgesehen, wobei sich überraschend gezeigt hat, dass trotz der lokal begrenzten hohen Temperaturen durch die reagierenden Zuschläge das Trägermaterial, z.B. Holz, nicht geschädigt wurde. Erfindungsgemäß sind die exotherm reagierenden Zuschläge dabei keine Bestandteile, die auch verglasen oder keramisieren.

Eine Weiterbildung der Erfindung sieht vor, dass die exotherm reagierenden Zuschläge in Korngrößen von 4 nm bis 120 nm in dem Mittel eindispergiert sind, um eine möglichst gleichmäßige Verteilung innerhalb der Brandschutzbeschichtung zu ermöglichen. Vorzugsweise ist das Brandschutzmittel transparent ausgebildet, um es möglichst unauffällig auf herkömmliche Trägermaterialien auftragen zu können.

Eine Weiterbildung der Erfindung sieht vor, dass die Zuschläge eine Thermitreaktion auslösen, also dass die Zuschläge aus Fe₂O₃ und Aluminium bestehen.

Weiterhin ist es vorgesehen, dass das Brandschutzmittel intumeszierende Bestandteile mit unterschiedlichen Intumeszenzreaktionstemperaturen aufweist, um verschiedene aufschäumende oder ausdehnende Reaktionen in abgestuften Abläufen zu erhalten.

Das Brandschutzmittel kann eine polymere Bindemittelmatrix aufweisen, in der sowohl die keramisierenden oder verglasenden bzw. intumeszierenden Bestandteile und die Zuschläge eingebettet sind. Mit einer solchen Bindemittelmatrix ist es besonders einfach, das Brandschutzmittel als ein Anstrichmittel auszugestalten.

Bevorzugt sind die Zuschläge so gewählt, dass eine Reaktionstemperatur in dem Brandschutzmittel von mehr als 700°C bis zu 2200°C erzeugt wird, um die Ausbildung einer echten Keramik, die ab diesem Temperaturniveau beginnt, zu ermöglichen.

Als Zuschläge können beispielsweise Fe₂O₃, Aluminium und/oder Magnesium verwendet werden, die jeweils mit einem Anteil zwischen 10 und 70 % an den Zuschlägen vorhanden sein können. Die Zuschläge selbst können einen Anteil von bis zu 20 Gew.-% an der Beschichtung ausmachen. Die Menge kann z. B. in einem Bereich von 0,01 Gew.-% bei 20 Gew.-% liegen, wie 0,1 Gew.-%bis 10 Gew.-%, z. B. 0,5 Gew.-% bis 5 Gew.-%.

Durch das Einarbeiten von exotherm reagierenden Energieträgern in das Brandschutzmittel ist es möglich, sehr schnell Energie in Form von hohen Temperaturen, die über 1000°C betragen können, nach Erreichen einer Triggertemperatur kurzfristig freizusetzen. Mittels dieser Umgebungstemperaturen in unmittelbarer Nähe der Beschichtung wird ein Sinterungs- und ggf. Aufschäumprozess eingeleitet, so dass eine Ausprägung einer Keramik oder einer verglasten Intumeszenzbeschichtung bereits bei relativ niedrigen Brandraumtemperaturen beginnen kann. Weiterhin wird durch die exotherm reagierenden Zuschläge die Intumeszenzreaktion beschleunigt, sofern intumeszierende Bestandteile innerhalb der Brandschutzbeschichtung vorhanden sind, so dass eine verbesserte Isolierwirkung für das Substrat des Brandschutzmittels bereitgestellt werden kann.

Eine erfindungsgemäße Zusammensetzung ist z.B. (im Folgenden beziehen sich alle %-Angaben auf Gewichtsprozent, solange nicht anders angegeben).
3 bis 30 Gew.-% eines filmbildenden Bindemittels auf Basis eines Polybutadienharzes
0 bis 2 Gew.-% eines Vernetzers
20 bis 55 Gew.-% eines bei Hitzeinwirkung glasierenden/keramisierenden Zusatzes
4 bis 25 Gew.-% eines Treibmittels
0 bis 51 Gew.-% Dispergiermittel
0 bis 25 Gew.-% Füllstoffe
0 bis 25 Gew.-% Pigmente
0 bis 25 Gew.-% Entschäumer
0 bis 25 Gew.-% anorganische Salze
0 bis 25 Gew.-% Verlaufsadditive
0,01 bis 20 Gew.-% exotherm reagierende Zuschlägen.

Eine weitere erfindungsgemäße Zusammensetzung besteht aus:
30 bis 70 Gew.-% einer lösemittelfreien Silicon-Mikoremulsion auf Silan/Siloxan-Basis, bevorzugt 40 bis 62 %, besonders bevorzugt 50 bis 56 %
3 bis 30 Gew.-% eines filmbildenden Bindemittels auf Basis eines Polybutadienharzes, bevorzugt 4 bis 20 %, besonders bevorzugt 6 bis 10 %
0 bis 2 Gew.-% eines Vernetzers auf Basis eines Dicyanates
20 bis 55 Gew.-% eines bei Hitzeinwirkung glasierenden/keramisierenden Zusatzes, bevorzugt 30 bis 44 %, besonders bevorzugt 35 bis 38 %
4 bis 25 Gew.-% eines Treibmittels
0 bis 51 Gew.-% Dispergiermittel
0 bis 25 Gew.-% Füllstoffe
0 bis 25 Gew.-% Pigmente
0 bis 25 Gew.-% Entschäumer
0 bis 25 Gew.-% Verlaufsadditive
0 bis 25 Gew.-% (anorganische) Salze
0,01 bis 20 Gew.-% exotherm reagierende Zuschlägen.

Eine weitere erfindungsgemäße Ausführungsform umfasst:
30 bis 40 Gew.-% einer Mischung verschiedener Harze auf Basis von Formaldehyd-Harnstoffharzen
6 bis 13 Gew.-% eines bei Hitzeeinwirkung glasierenden/keramisierenden Zusatzes
10 bis 18 Gew.-% eines Ammoniumpolyphosphates
5 bis 10 Gew.-% eines Treibmittels
30 bis 40 Gew.-% eines partiellen Phosphorsäureesters
0 bis 25 Gew.-% Pigmente
0 bis 25 Gew.-% Entschäumer
0 bis 25 Gew.-% Verlaufsadditive
0 bis 10 Gew.-% weiterer, üblicher Additive
0,01 bis 20 Gew.-% exotherm reagierende Zuschlägen.

Der bei Hitzeeinwirkung glasierende/keramisierende Zusatz ist dabei einer, der 12 bis 88 % Dinatriumtetraborat, 12 bis 88 % B₂O₃ und/oder 12 bis 88 % SiO₂ umfasst.

Der Zusatz kann weiterhin weitere Glas- bzw. Keramikbildner enthalten, wie Na₂CO₃, KAlSO₄, Ammoniumpentaborat, CaO, SiC.

Wenn keramisierende Additive zu herkömmlichen intumeszierenden Kohlenstoffschaumbildnern als Zusatz zugefügt werden, ist die Zusammensetzung dieses Zusatzes in einer bevorzugten Ausführungsform:
25 bis 40 % Ammoniumpolyphosphat
20 bis 26 % Melamin
5 bis 15 % SiO₂ und
5 bis 35 % Dinatriumtetraborat
0,01 bis 20 Gew.-% exotherm reagierende Zuschlägen.

In einer anderen Ausführungsform ist der Zusatz:
12 bis 88 Gew.-% Dinatriumtetraborat und
12 bis 88 Gew.-% B₂O₃
0,01 bis 20 Gew.-% exotherm reagierende Zuschlägen.

Ein bevorzugter Zusatz ist dabei:
25 bis 40 % Ammoniumpolyphosphat
20 bis 26 % Melamin
5 bis 15 % Si02
5 bis 35 % Dinatriumtetraborat
0 bis 5 % CaO
0 bis 25 % Pentaerythritol
5 bis 25 % B₂O₃ und
0 bis 10 % SiC
0,01 bis 20 Gew.-% exotherm reagierende Zuschlägen.

Eine andere bevorzugte Ausführungsform ist:
12 bis 55 % Dinatriumtetraborat
12 bis 55 % B₂O₃
0 bis 30 % Melamin
0 bis 50 % Ammoniumpolyphosphat
0 bis 15 % SiO₂
0 bis 15 % CaO
0,01 bis 20 Gew.-% exotherm reagierende Zuschlägen.

Eine besonders bevorzugte Ausführungsform ist:
10,0 % Dinatriumtetraborat
10,0 % B₂O₃
5,3 % SiO₂
2,7 % CaO
2,7 % SIC
30,0 % Exolit 422
20,0 % Melamin
19,3 % Pentraerythritol
0,01 bis 20 Gew.-% exotherm reagierende Zuschlägen.

In den oben genannten bevorzugten Ausführungsformen kann, wenn vorhanden, Pentaerythritol durch Dipentaerythritol ersetzt sein. Gleiches gilt für Ammoniumpolyphosphat, dieses kann durch Ammoniummonophosphat ersetzt sein.

Eine weitere bevorzugte Ausführungsform umfasst Anstriche auf Formaldehyd-Melaminharz-Basis, wie z.B. eine folgende bevorzugte Ausführungsform:
20-30 Gew.-% Formaldehyd-Melaminharz
30-50 Gew-% partieller Phosphorsäureester
0-1 Gew.-% Entschäumer
0-20 Gew.-% Borate
0-20 Gew.-% Silikate
0-20 Gew.-% Silikonkautschuk
0-2 Gew.-% SiC
0-10 Gew.-% SiO₂
0-5 Gew.-% weitere Additive
0,01 bis 20 Gew.-% exotherm reagierende Zuschlägen.

Eine weitere Möglichkeit ist eine Beschichtung auf Silikonkautschukbasis, wie eine Zusammensetzung, die unter anderem folgende Bestandteile enthält: 40-80 Gew.-% Silikonkautschuk
0-40 Gew.-% Phosphorsäureester
0-40 Gew.-% Borate

Als Beschichtungen für den Außenbereich sind Beschichtungen auf MDI-Basis vorstellbar, wie Beschichtungen mit folgender Zusammensetzung:
20-40 Gew.-% Präpolymer auf MDI-Basis
10-20 Gew.-% Wasserglas
10-40 Gew.-% Borate
0-15 Gew.-% Phenolharz
0-1 Gew.-% SiC
0-10 Gew.-% SiO₂
0-0,5 Gew.-% Ti02
0-20 Gew.-% Cokatalysatoren, Verdünner, Weichmacher
0,01 bis 20 Gew.-% exotherm reagierende Zuschlägen.

Obige Zusammensetzung kann als Zusatz zu herkömmlichen Beschichtungszusammensetzungen für den Außenbereich zugegeben werden.
Schließlich können die keramisierenden Additive und Volumenbildner auch zu herkömmlichen strahlungshärtbaren Lacksystemen zugegeben werden. Beispielhaft sei hier ein strahlungshärtbares Lacksystem, das mit UV-Strahlung ausgehärtet werden kann, genannt:
20 bis 65 Gew.-% Ebecryl 284
10 bis 30 Gew.-% Ebecryl 1039
5 bis 30 Gew.-% Ebecryl 8804
4 bis 20 Gew.-% Ebecryl 1259
0,1 bis 0,5 Gew.-% Tego Wet KL 245
1 bis 6 Gew.-% Photoinitiator
0 bis 10 Gew.-% weiterer, üblicher Additive
0,01 bis 20 Gew.-% exotherm reagierende Zuschlägen.

Zu der oben genannten strahlungshärtbaren Lackzusammensetzung können die vorgenannten Zusätze zum Beispiel mit einem Anteil von 30 bis 55 Gew.-%, bezogen auf den Anteil des UV-Lacks zugefügt werden.

Als Dispergiermittel, Pigment, Entschäumer, Verlaufsadditive wurden solche verwendet, wie sie üblicherweise für Anstriche, Lacke und Brandschutzmittel verwendet werden.

Bevorzugt werden die Bestandteile des keramisierenden Additivs vor Dispersion in den weiteren Bestandteilen des Brandschutzmittels fein vermahlen, z.B. werden die Bestandteile vor Dispersion bis zu 3 Tage in einer Kugelmühle unter Feuchtigkeitsausschluss gemahlen. Anschließend erfolgt ein Eindispergieren der Pulvermischung in die weiteren Bestandteile des Brandschutzmittels.

In einer weiteren Ausführungsform betrifft die vorliegende Erfindung ein Verfahren zur Behandlung von Werkstoffen für den Brandschutz, wobei die erfindungsgemäßen Brandschutzmittel auf den Werkstoff aufgebracht werden. Bevorzugt handelt es sich hierbei um einen Holzwerkstoff.

Schließlich betrifft die vorliegende Erfindung die Verwendung der erfindungsgemäßen Brandschutzmittel als Brandschutz für Holz, Stahl, Beton und Kunststoff.

## Patentansprüche

1. Brandschutzmlttel mit verglasenden oder keramisierenden Bestandteilen, **dadurch gekennzeichnet, dass** exotherm reagierende Zuschläge enthalten sind, die bei Temperaturen von mehr als 90°C unter Freisetzung thermischer Energie reagieren, wobei die Zuschläge eine Reaktionstemperatur von mehr als 700 °C erzeugen, um die keramisierenden oder verglasenden Bestandteile bei der Ausbildung einer porösen Keramik zu unterstützen

2. Brandschutzmittel nach Anspruch 1, **dadurch gekennzeichnet, dass** die exotherm reagierenden Zuschläge bei Temperaturen von mehr als 90°C aber unterhalb der Umsetzungstemperatur der verglasenden oder keramisierenden Bestandteile unter Freisetzung thermischer Energie reagieren.

3. Brandschutzmittel nach Anspruch 1 oder 2, **dadurch gekennzeichnet, dass** die exotherm reagierenden Zuschläge in Korngrößen von 4 nm bis 120 nm in dem Mittel eindispergiert sind.

4. Brandschutzmittel nach einem der voranstehenden Ansprüche, **dadurch gekennzeichnet, dass** das Brandschutzmittel transparent ausgebildet ist.

5. Brandschutzmittel nach einem der voranstehenden Ansprüche, **dadurch gekennzeichnet, dass** die Zuschläge eine Thermitreaktion auslösen.

6. Brandschutzmittel nach einem der voranstehende Ansprüche, **dadurch gekennzeichnet, dass** intumeszierende Bestandteile mit unterschiedlichen Intumeszenzreaktionstemperaturen enthalten sind.

7. Brandschutzmittel nach einem der voranstehenden Ansprüche, **dadurch gekennzeichnet, dass** dieses eine polymere Bindemittelmatrix zur Aufnahme der Bestandteile und Zuschläge aufweist.

8. Brandschutzmittel nach einem der voranstehenden Ansprüche, **dadurch gekennzeichnet, dass** es als Anstrichmittel ausgebildet ist.

9. Brandschutzmittel nach einem der voranstehenden Ansprüche, **dadurch gekennzeichnet, dass** als Zuschläge Fe₂O₃, Aluminium und/oder Magnesium verwendet werden.

10. Brandschutzmittel nach Anspruch 9, **dadurch gekennzeichnet, dass** die Zuschläge 10 bis 70 % Fe₂O₃, 10 bis 70 % Aluminium und 10 bis 70 % Magnesiumenthaiten.

11. Brandschutzmittel nach einem der vorherigen Ansprüche, **dadurch gekennzeichnet, dass** die exotherm reagierenden Zuschläge in einer Menge von bis zu 20 Gew.-% vorhanden sind.

12. Verfahren zur Behandlung von Werkstoffen für den Brandschutz, umfassendes Aufbringen einer Zusammensetzung gemäß einem der Ansprüche 1 bis 11.

13. Verwendung eines Brandschutzmittels gemäß einem der Ansprüche 1 bis 11 als Brandschutz für Holz, Stahl, Beton, Kunststoff.

## Claims

1. Flame retardant comprising vitrifying or ceramic-forming components, **characterized in that** the additives reacting exothermically are contained therein which react at temperatures above 90°C releasing thermic energy whereby the additives generate reaction temperature above 700°C to support the ceramic-forming or vitrifying components in forming a porous ceramic.

2. Flame retardant according to claim 1, **characterized in, that** the additives reacting exothermically at temperatures above 90°C but below the reaction temperature of the vitrifying of ceramic-forming components under release of thermic energy.

3. Flame retardant according claim 1 or 2, **characterized in, that** the additives reacting exothermically have a corn size of 4 nm to 120 nm being dispersed in said flame retardant.

4. Flame retardant according to any one of the preceding claims, **characterized in, that** the flame retardant is transparent.

5. Flame retardant according to any one of the preceding claims, **characterized in, that** the additives cause a thermite reaction.

6. Flame retardant according to any one of the preceding claims, **characterized in, that** intumescent components having different intumescence reaction temperatures are contained therein.

7. Flame retardant according to any one of the preceding claims, **characterized in, that** the flame retardant has a polymeric adhesive matrix allowing containing the components and additives.

8. Flame retardant according to any one of the preceding claims, **characterized in, that** the flame retardant is designed as paint.

9. Flame retardant according to any one of the preceding claims, **characterized in, that** the additives are Fe₂O₃, aluminum and/or magnesia.

10. Flame retardant according to claim 9, **characterized in, that** the additives contain 10 to 70 % Fe₂O₃, 10 to 70 % aluminum and 10 to 70 % magnesium.

11. Flame retardant according to any one of the preceding claims, **characterized in, that** the additives reacting exothermically are present in an amount of up to 20 wt.-%.

12. Method for the treatment of materials for fire protection comprising applying a composition according to any one of claims 1 to 11.

13. A use of a flame retardant according to any one of claims 1 to 11 as fire protection for wood, steel, concrete, plastic.

## Revendications

1. Agent ignifuge comprenant des constituants vitrifiants ou formant une céramique, **caractérisé en ce que** des additifs à réaction exothermique sont contenus, qui réagissent à des températures supérieures à 90°C avec libération d'énergie thermique, où les additifs produisent une température de réaction supérieure à 700°C, pour soutenir les constituants formant une céramique ou vitrifiants lors de la formation d'une céramique poreuse.

2. Agent ignifuge selon la revendication 1, **caractérisé en ce que** les additifs à réaction exothermique réagissent à des températures de plus de 90°C mais sous la température de transformation des constituants de vitrification ou formant une céramique avec libération d'énergie thermique.

3. Agent ignifuge selon la revendication 1 ou 2, **caractérisé en ce que** les additifs à réaction exothermique sont dispersés dans l'agent avec des grosseurs de grain de 4 nm à 120 nm.

4. Agent ignifuge selon l'une quelconque des revendications précédentes, **caractérisé en ce que** l'agent ignifuge est formé en étant transparent.

5. Agent ignifuge selon l'une quelconque des revendications précédentes, **caractérisé en ce que** les additifs déclenchent une réaction aluminothermique.

6. Agent ignifuge selon l'une quelconque des revendications précédentes, **caractérisé en ce que** des constituants intumescents présentant des températures de réaction d'intumescence différentes sont contenus.

7. Agent ignifuge selon l'une quelconque des revendications précédentes, **caractérisé en ce qu'**il présente une matrice d'agent liant polymère destinée à recevoir les constituants et les additifs.

8. Agent ignifuge selon l'une quelconque des revendications précédentes, **caractérisé en ce qu'**il est réalisé sous forme d'enduit.

9. Agent ignifuge selon l'une quelconque des revendications précédentes, **caractérisé en ce que** le Fe₂O₃, l'aluminium et/ou le magnésium sont utilisés comme additifs.

10. Agent ignifuge selon la revendication 9, **caractérisé en ce que** les additifs contiennent 10 à 70% de Fe₂O₃, 10 à 70% d'aluminium et 10 à 70% de magnésium.

11. Agent ignifuge selon l'une quelconque des revendications précédentes, **caractérisé en ce que** les additifs à réaction exothermique sont présents en une quantité allant jusqu'à 20% en poids.

12. Procédé pour le traitement de matériaux en vue de la protection contre le feu, comprenant l'application d'une composition selon l'une quelconque des revendications 1 à 11.

13. Utilisation d'un agent ignifuge selon l'une quelconque des revendications 1 à 11 comme protection contre le feu pour le bois, l'acier, le béton, le matériau synthétique.
